# EUROPEAN PATENT APPLICATION

(11) **EP 1 976 192 A1**
(43) Date of publication of application: **01.10.2008**
(21) Application number: 08152520.6
(22) Date of filing: 10.03.2008
(51) Int. Cl.: H04L 12/28

(54) **Failure information delivery system, failure management server, mobile object communication apparatus, failure information delivery method, and program**

(30) Priority: 28.03.2007 JP 2007084911
(71) Applicant: NEC CORPORATION, Minato-ku, Tokyo 108-8001 (JP)
(72) Inventor: Okamura, Yusaku, Tokyo (JP)
(74) Representative: Vossius & Partner

(57) **Abstract**

Upon detecting existence of characteristic information of a failure, of which search is requested, a mobile terminal device 102 notifies a failure management server 104 of the detected location information and time information together with the characteristic information of the failure, and the failure management server 104 notifies a terminal device 1022 of the location information of the failure to be estimated on the basis of the detected location information, time information, and the characteristic information of articles and allows the terminal device 1022 to output this location information. Thereby, even in the case that no communication apparatus is provided to a target apparatus, a failure can be detected and a probability of notification can be improved.

## Description

This application is based upon and claims the benefit of priority from Japanese paten application No. 2007-084911, filed on March 28, 2007, the disclosure of which is incorporated herein in its entirety by reference.

The present invention relates to an art to detect a trouble and a failure, and particularly, the present invention relates to an art to detect a trouble and a failure using a mobile terminal or the like and attaching various kinds of sensors to the mobile terminal or the like.

In the case that a trouble is generated in a home electric appliance of a user, a home electric appliance repairing art provided by a repair information service for automatically accessing a home electric appliance repair server from a home communication terminal and sending the information about the faulty home electric appliance, the trouble information, and the location information has been used. As this, for example, the art disclosed in

JP-A- 2002-352025 (Patent Document 1) has been known.

Next, the problem of the above described related art will described.

The above-described related art provides a system assuming that a communication function is provided to each home electric appliance and this involves a problem such that notification of a failure when the communication function is not provided is not considered.

The present invention has been made taking the foregoing problems into consideration and an object of which is to provide a failure information delivery system, a failure management server, a mobile object communication apparatus, a failure information delivery method, and a program, which can detect a failure and improve a probability of notification even when a communication apparatus is not provided to a target apparatus since a failure is detected loading sensors on a plurality of mobile terminals.

### Failure Information Delivery System

In order to achieve such an object, a first aspect of the present invention provides a failure information delivery system including:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device;
and at least one or more mobile object communication apparatuses including means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested;
and the failure management server, notifying the terminal device of location information of the failure to be estimated on the basis of the detected location information, time information, and characteristic information of articles, allows the terminal device to output the location information.

### Failure Management Server

In addition, a second aspect of the present invention provides a failure management server in a failure information delivery system, the system including:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device;
and at least one or more mobile object communication apparatuses including means for obtaining characteristic information of a failure and means for positioning a location of itself, the mobile object communication apparatuses searching a location where the characteristic information of the failure, of which search is requested, is located on the basis of the failure information obtained from the failure management server;
wherein the failure management server receives a notification of detected location information and time information from the mobile object communication apparatus together with the characteristic information of the failure when detecting existence of the characteristic information of the failure, of which search is requested;
and the failure management server, notifying the terminal device of location information of the failure to be estimated on the basis of the detected location information, time information, and characteristic information of articles, allows the terminal device to output the location information.

Mobile Object Communication Apparatus In addition, a third aspect of the present invention provides a mobile object communication apparatus in a failure information delivery system, the system including:
a terminal device for requesting a failure management server to search a location where a failure to be searched is located by sending search request information including at least the failure to be searched and/ or characteristic information of the failure to be searched; a failure management server for issuing failure information including at least failure identification information to identify each failure and/ or failure characteristic information owned by each failure to a mobile object communication apparatus on the basis of the search request information upon accepting a search request from the terminal device;
and at least one or more mobile object communication apparatuses including means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested;
and the mobile object communication apparatus receives a notification of location information of the failure to be estimated on the basis of the detected location information, time information, and characteristic information of articles from the failure management server and outputs the location information.

### Failure Information Delivery Method

In addition, a fourth aspect of the present invention provides a failure information delivery method using:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device; and
at least one or more mobile object communication apparatuses including means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested; and
the failure management server, notifying the terminal device of location information of the failure to be estimated on the basis of the detected location information, time information, and characteristic information of articles, allows the terminal device to output the location information.

### Program

In addition, a fifth aspect of the present invention provides a program allowing a failure management server in a failure information delivery system to carry out processing for receiving a notification of detected location information and time information from a mobile object communication apparatus together with characteristic information of a failure when detecting existence of the characteristic information of the failure, of which search is requested; and
processing for notifying a terminal device of location information of the failure to be estimated on the basis of the detected location information, time information, and characteristic information of articles and outputting the location information to the terminal device;
wherein the failure information delivery system including:
the terminal device for requesting the failure management server to search a location where the failure to be searched is located by sending search request information including at least the failure to be searched and/ or characteristic information of the failure to be searched;
the failure management server for issuing failure information including at least failure identification information to identify each failure and/ or failure characteristic information owned by each failure to the mobile object communication apparatus on the basis of the search request information upon accepting a search request from the terminal device;
and at least one or more mobile object communication apparatuses including means for obtaining the characteristic information of the failure and means for positioning the location of itself, the mobile object communication apparatuses searching the location where the characteristic information of the failure, of which search is requested, is located on the basis of the failure information obtained from the failure management server.

Further, a sixth aspect of the present invention provides a program allowing a mobile object communication apparatus in a failure information delivery system to carry out the processing for notifying a failure management server of detected location information and time information together with characteristic information of a failure when detecting existence of the characteristic information of the failure, of which search is requested; and
processing for receiving a notification of location information of the failure to be estimated on the basis of the detected location information, time information, and characteristic information of articles from the failure management server and outputting the location information;
wherein the failure information delivery system including:
the terminal device for requesting the failure management server to search a location where the failure to be searched is located by sending search request information including at least the failure to be searched and/ or characteristic information of the failure to be searched;
the failure management server for issuing failure information including at least failure identification information to identify each failure and/ or failure characteristic information owned by each failure to the mobile object communication apparatus on the basis of the search request information upon accepting a search request from the terminal device; and
at least one or more mobile object communication apparatuses including means for obtaining the characteristic information of the failure and means for positioning the location of itself, the mobile object communication apparatuses searching the location where the characteristic information of the failure, of which search is requested, is located on the basis of the failure information obtained from the failure management server.

The invention is further disclosed with reference to the drawings:
Fig. 1 is a block diagram of an entirety of a failure information delivery system according to an exemplary embodiment of the present invention.
Fig. 2 shows a configuration example of a database of a failure management server according to the embodiment of the present invention.
Fig. 3 is a view illustrating an input screen of failure information or the like of a terminal device according to the embodiment of the present invention.
Fig. 4 is a view illustrating a delivery screen of failure information of a terminal device according to the embodiment of the present invention.
Fig. 5 is a view illustrating data of a positional scope for a specific place name to be held in the database of a place name/ positional scope conversion and failure information server according to the embodiment of the present invention.
Fig. 6 is a block diagram showing details of a mobile terminal device of the failure information delivery system according to the embodiment of the present invention.
Fig. 7 is a flow chart showing the processing operation according to the embodiment of the present invention.

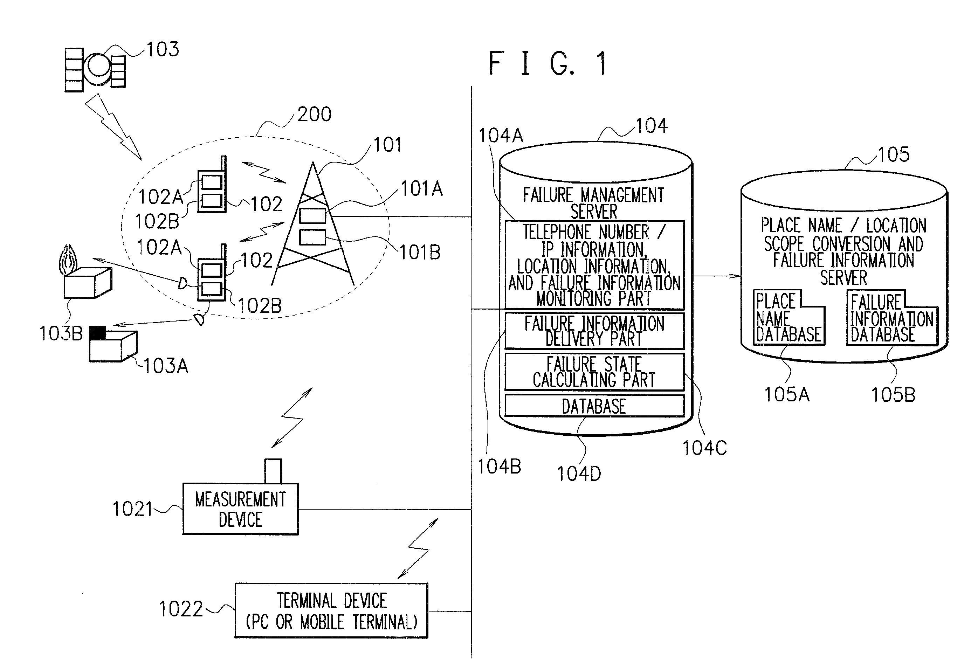

Fig. 1 is a block diagram of an entirety of a failure information delivery system according to an exemplary embodiment of the present invention.

Fig. 1 shows the case that a client who wishes to search a certain failure searches the failure in a certain area. In addition, for example, this failure is that an apparatus 103A generates a certain color and at the same time, generates a high temperature or an apparatus 103B generates a flame. Assuming such a condition, at first, the summary of the overall configuration of the failure information delivery system according to the present embodiment enabling to search such a failure will be described.

In Fig. 1, a terminal device 1022 is an information processor for requesting a failure management server 104 to be described later to search a location of a failure in the case that a client wishes to search the failure. And the terminal device 1022 may be a mobile terminal device.

The terminal device 1022 is connected to the failure management server 104 via a network such as the Internet so as to make communication between the both possible.

In the terminal device 1022, when the client wishes to search a certain failure, the client asks the failure management server 104 to search a location where the failure is located.

The terminal device 1022 sends the information of the failure to be searched, the priority search area information as a place where the estimated failure is located, and a time when this search request information is obtained to the failure management server 104, and then, the terminal device 1022 will request the searching of the failure.

The failure management server 104 is an information processor for managing the information of each failure, the location information, and the information of the time when such information is obtained.

The failure management server 104 accepts a search request from the terminal device 1022, and on the basis of the search request information, the failure management server 104 will search the failure information as the information related to a failure from a database 104D. Then, the failure management server 104 notifies the terminal device 1022 that requests search of this search result.

The failure management server 104 issues a search request to a mobile terminal device 102 to be described later and accepts the search result from the mobile terminal device 102, the failure management server 104 creates and updates the database 104D as needed.

The failure management server 104 accepts the search request of the failure from the terminal device 1022. Particularly, upon accepting the search request of the failure, the failure management server 104 accepts the failure information or characteristic information and the information of the place where the estimated failure is located as the priority search area information.

As the failure information or the characteristic information, for example, general failure information such as a fire may be available or characteristic information such as "a bluish white color, a high temperature not less than 200°C" indicating the characteristic of the failure may be also available.

The priority search area information is designated as the information indicating a floor in a building or an area or a scope that is shown by a radius of a length from a certain location as the place of the estimated failure. As an example, the information such as "2nd floor, or within a radius of 500m from a pole number 1 to 3" may be available.

In addition, the failure management server 104 issues the characteristic information of the failure as the information related to the failure to the mobile terminal device 102 to be described later on the basis of the search request information. In this case, the failure management server 104 is characterized by issuing this failure search information to the mobile terminal device 102 passing through a priority search area (for example, the area shown by 200 of Fig. 1) by priority.

In order to realize a function including such a characteristic, at first, the failure management server 104 sends the characteristic information of the failure which the client requests to the mobile terminal device 102 via a base station 101. Then, the mobile terminal device 102 stores the received characteristic information in a characteristic storing part 111. Further, the base station 101 is a communication means for making communication between the failure management server 104 and the mobile terminal device 102 to be described later.

The mobile terminal device 102 searches the information including a characteristic of a failure located near itself by using a sensor. When the characteristic is found, the mobile terminal device 102 notifies the failure management server 104 of this characteristic information and the location of the failure and the time information.

Further, the failure management server 104 creates the database 104D obtaining the characteristic of the failure and the location and time information from the mobile terminal device 102.

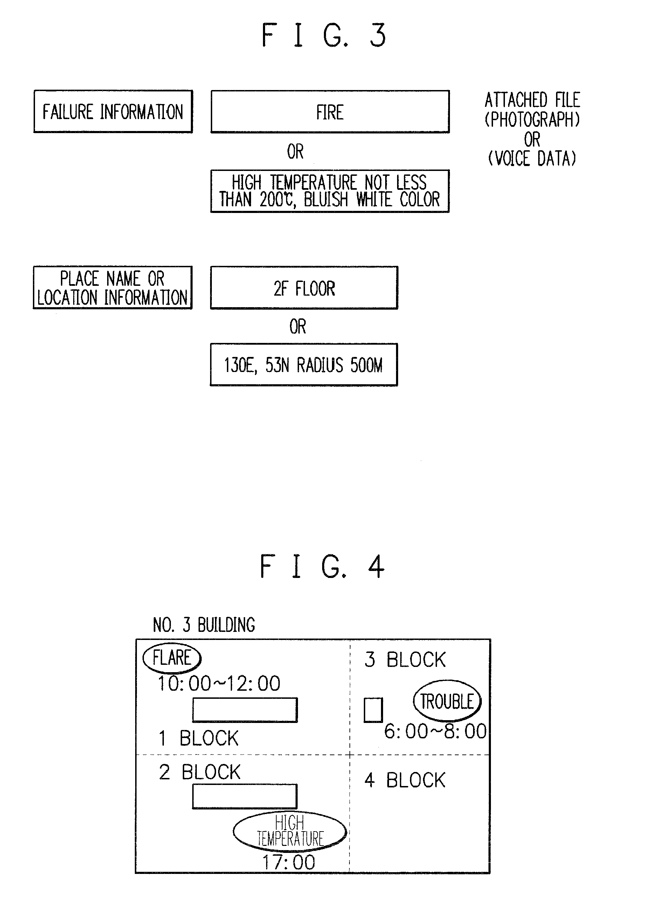

The failure management server 104 allows the terminal device 1022 to display the location information about the location where the failure including a characteristic seems to be located, the characteristic information of the failure that the mobile terminal device 102 obtains from the sensor, and the time when the information is confirmed on the display screen of the terminal device 1022 on the basis of the created database 104D (refer to Fig. 4).

The mobile terminal device 102 is a mobile object communication apparatus capable of being communicated to the failure management server 104 and further, the mobile terminal device 102 has a positioning means such as a Global Positioning System (GPS) that can detect a location of itself. The mobile terminal device 102 is connected to a plurality of GPS satellites 103, which are artificial earth satellites, by satellite connection and the location information of itself is offered as two-dimensional or three-dimensional information based on an electric wave from the GPS satellite 103. Further, the mobile terminal device 102 includes a sound, image, and infrared sensor or the like and includes a function capable of measuring and analyzing the characteristic information of the neighboring failure.

In addition, the present failure information delivery system is a system to use a plurality of these mobile terminal devices 102 and search the failure by means of a plurality of mobile terminal devices 102 that can be moved.

The mobile terminal device 102 can search the location of the failure where the requested characteristics are located on the basis of the failure search information from the failure management server 104 since the mobile terminal device 102 includes the sound, image, and infrared sensor or the like and includes a function capable of measuring and analyzing the characteristic information of the neighboring failure.

In addition, the mobile terminal device 102 notifies the failure management server 104 of the location information that is the information about the location where the failure, of which search is requested, is located and the information of the measured time together with existence of the characteristic information of the failure, of which search is requested, by means of the positioning means.

The failure management server 104 obtains the characteristic information and the location of the notified failure and the information about the time when the measurement is made and updates the database 104D.

According to the configuration of the present failure information delivery system as described above, for example, in the case of searching a predetermined failure, by requesting the failure management server 104 from the terminal device 1022, a plurality of mobile terminal devices 102 can search the failure by using the sensor.

Further, due to notification of the detected location information from the mobile terminal device 102 that detected the location where the failure including a characteristic of a predetermined failure is located or a neighborhood location, the client can narrow down the location of the failure or the neighborhood location.

If the terminal device 1022 accesses the failure management server 104, a failure information delivery part 104B of the failure management server 104 allows the terminal device 1022 to obtain page information and allows the display part to output the failure information or its characteristic information, display to request the search area information, and the decision selection display in the page information which is obtained (refer to Fig. 3).

The user inputs the characteristic information of the failure to be searched and the area information to be searched by priority as a specific place name or location information and its scope and selectively deciding them, the input characteristic information and location information are sent to the failure information delivery part 104B of the failure management server 104.

Further, the characteristic information of the failure may be input based on designation of the image data or the voice data representing the characteristic. In addition, the specific place name or location information may be input based on designation of a specific location on a map that is displayed on the display part.

As shown in Fig. 4, the failure information delivery part 104B sends the failure information to the terminal device 1022 requesting the failure information and displays the location information of the failure on the display of the terminal device 1022 so as to enable the client to confirm the detailed state of the failure. Further, the characteristic information of the failure may have a function to display the measured information in detail.

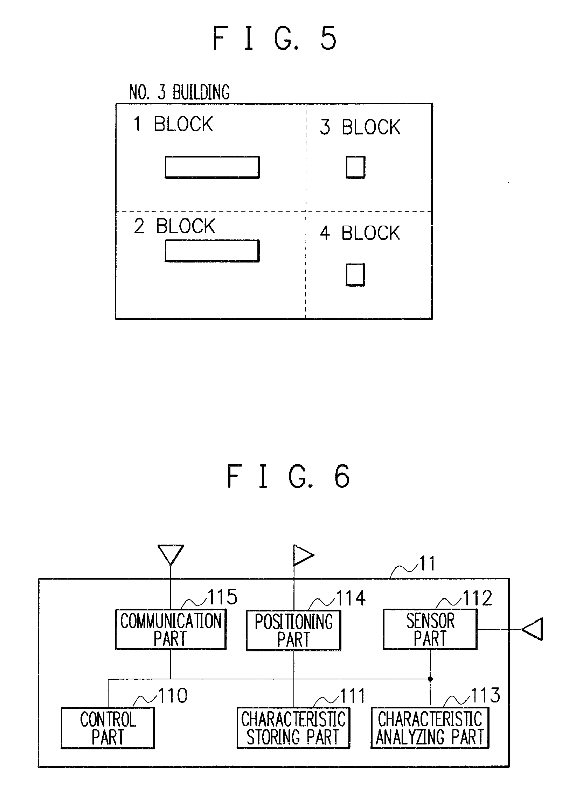

Fig. 5 is a view illustrating data of a location scope for a specific place name and data of characteristic information related to a specific failure to be held in a place name database 105A and a failure information database 105B of a place name/ location scope conversion and failure information server 105 in Fig. 1.

As shown in Fig. 5, in the place name database 105A, the location scope information for each specific place name is held as two-dimensional or three-dimensional data, and the location scope to be surrounded is converted into a specific place name, namely, "2F floor".

In addition, in the database 105B, the characteristic information related to a specific failure is held as a form of voice, an image, and pattern data or the like, and the characteristic information of the failure is converted into a designated failure name, namely, "a fire". Further, the place name database 105A and the failure information database 105B can update, add, and delete the information as needed.

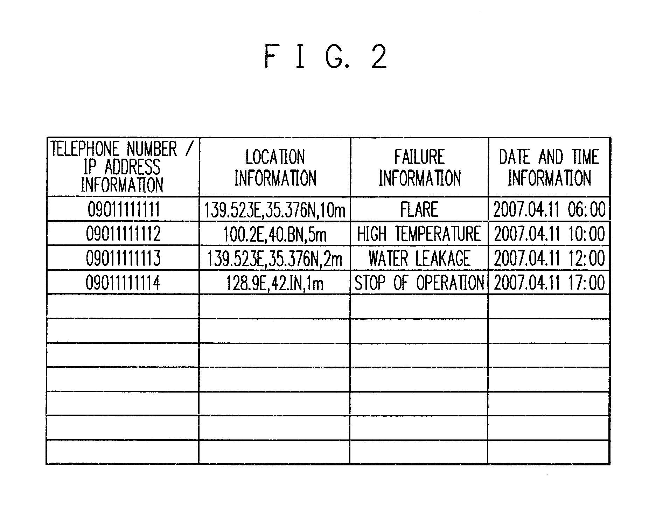

Fig. 2 is a block diagram showing details of a sensor part of the mobile terminal device 102. As shown in Fig. 2, the sensor part 11 is configured by a characteristic storing part 111 for storing the characteristic information of the failure, a sensor part 112 for obtaining the information of the failure by the sensor, a characteristic analyzing part 113 for analyzing and extracting a characteristic from the obtained information, and a control part 110 for controlling the entirety of the sensor part.

The sensor part 112 obtains the information similar to the characteristic information of the failure that is input from the terminal device 1022 by using the sensor.

The characteristic storing part 111 stores the characteristic information of the failure that is sent from the failure management server 104.

The characteristic analyzing part 113 extracts an information/pattern to be particularly used for searching the failure from the failure information obtained from the sensor part 112 to compare it with the characteristic information stored in the characteristic storing part 111.

In the case that a similar characteristic is found, the user sends the characteristic information of this failure together with the location information of the failure from a positioning part 114 and the information of a time when the similar characteristic is found to the failure management server 104 by using a communication part 115.

Fig. 2 is a view showing a configuration example of the database 104D of the failure management server 104. Fig. 2 shows an example that the failure information is configured by telephone and IP address information, location information, characteristic information of a failure, and a measuring date.

The telephone and IP address information is a telephone number or an IP address owned by the mobile terminal device 102 that obtained the information of the failure, the location is the location information of the terminal and the failure when the information of the terminal and failure when the failure information is obtained, the characteristic of the failure is the characteristic information of a failure such as a colored design and temperature measured by the sensor, and the measuring date is a time when the characteristic information is measured.

Hereinafter, with reference to the drawings, the operation in each apparatus for finding a failure by means of a failure information delivery system according to the present embodiment configured as described above will be described in detail.

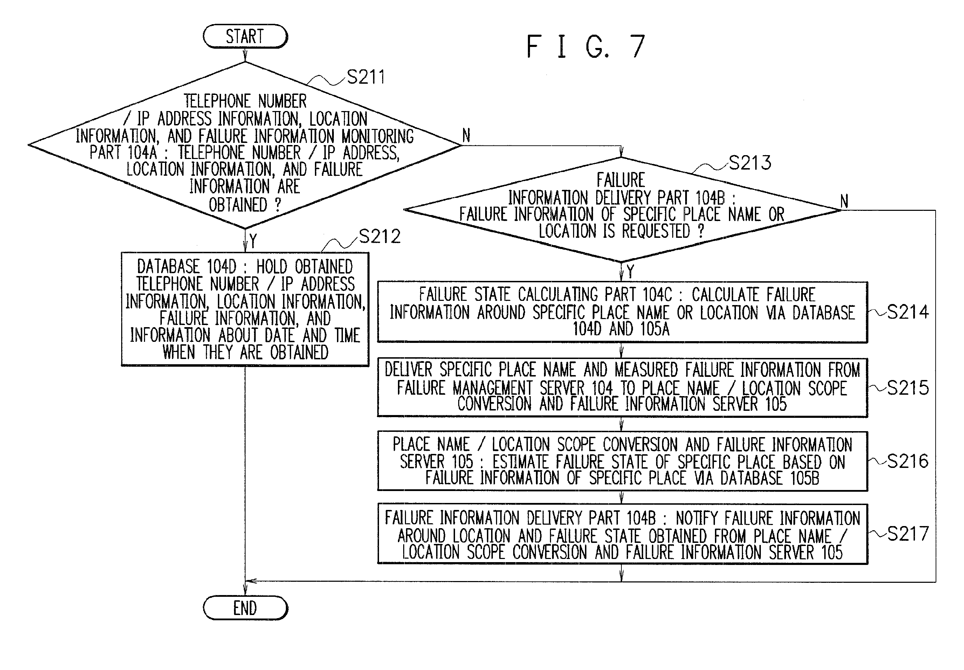

At first, the case of searching a failure of "a fire" will be described with reference to Fig. 7.

The terminal device 1022 sends the information related to "a fire" that is a failure to be searched to the failure management server 104 and requests the failure management server 104 to search the failure.

In this case, the terminal device 1022 informs the failure management server 104 of a failure name or characteristic information of the failure and, if it is known, the area information for searching the place of the failure by priority.

As an example of the characteristic information of the failure, the information of "a bluish white color, a high temperature not less than 200°C" is available, and as an example of the priority search area information, the information such as "2F floor" and "rooms 201 to 204" or the like is available.

The failure management server 104 sends the failure information and the priority search area information to the place name/ location scope conversion and failure information server 105, and the place name/ location scope conversion and failure information server 105 converts the priority search area information into coordinate information of the two or three dimension and converts the failure information to the characteristic information of the failure by using the place name database 105A and the failure information database 105B.

On the basis of the priority search area information from the mobile terminal device 102, the failure information delivery part 104B of the failure management server 104 sends the information to request search of the failure to the mobile terminal device 102 passing through the area indicated by the priority search area information by priority. Thereby, a preparation to search and detect a failure is completed.

With respect to the operations of the failure information delivery part 104B of the failure management server 104, a more specific example will be given. For example, when there is a request of the priority search area, namely, "2F floor" as a request content, the failure information delivery part 104B converts the area indicated by the priority search area into coordinate information by means of the place name/ location scope conversion and failure information server 105. Then, the characteristic information of the failure, of which search is requested, is notified to the mobile terminal device 102 passing through this coordinate scope as a failure search request. When a person carrying the mobile terminal device 102 is moving in the area to be searched, searching of the notified failure will be made.

The mobile terminal device 102 obtains the information such as a color and a temperature from a neighborhood failure by means of the sensor part 112 with moving itself. The characteristic analyzing part 113 extracts and analyzes the characteristic information from the obtained measurement information and compares this characteristic information with the characteristic information stored in the characteristic storing part 111.

In the case that the mobile terminal device 102 finds a failure including a characteristic similar to a failure to be searched, the communication part 115 notifies the failure management server 104 of the characteristic information of the found failure and the time when measurement is made. At the same time, the positioning part 114 obtains the location information near the place where the failure is found and notifies the communication part 115 of this location information as the detected location information (S211).

The failure management server 104 accepts this notification and registers the characteristic information, the location, and measurement time information of the found failure in the database 104D (S212). By regularly receiving a notification, tracking and analysis in chronologic order becomes also possible.

The terminal device 1022 can specify the location of the failure similar to the failure to be searched by accessing the failure information delivery part 104B. As an example of display, Fig. 4 is considered.

In other words, when the failure information delivery part 104B requests the failure information of a specific place name or location (S213), a failure state calculating part 104C calculates the failure information around a specific place name or location with reference to the database 104D and the place name database 105A (S214).

Next, the specific place name and the measured failure information are delivered to the place name/ location scope conversion and failure information server 105 from the failure management server 104 (S215).

With reference to the failure information database 105B, the place name/location scope conversion and failure information server 105 estimates the failure state of that place on the basis of the failure information of the specific place (S216).

The failure information delivery part 104B notifies the terminal device 1022 of the failure information around the location and the failure state obtained from the place name/ location scope conversion and failure information server 105 (S217).

As described above, the failure information delivery system according to the present embodiment extracts the characteristic data from the neighborhood failure to search a location of a failure including a similar characteristic by loading various sensors in the unspecified number of mobile object communication apparatuses and further, providing a characteristic analyzing part for analyzing the measurement data.

Particularly, the failure information delivery system according to the present embodiment is available for search of various failures with no wireless communication apparatus provided since this failure information delivery system searches the failure by using various sensors. Further, the failure information delivery system according to the present embodiment can be also used for a failure information delivery system using the wireless communication apparatus and a measurement device 1021 as a supplemental form.

Further, the above-described respective embodiments are preferable embodiments of the present invention and various changes may be made without departing from the scope of the invention. For example, the processing to realize the functions of respective apparatuses may be carried out by allowing respective apparatuses to read and carry out a program for realizing the functions of the terminal device 1022, the mobile terminal device 102, and respective servers. Further, the program may be transmitted to other computer system by a transmitted wave via a CD-ROM or a magnetic optical disk or the like which is a computer-readable recording media or Internet and a telephone line as a transmission medium.

As an example of effect of the present invention, it is considered that a failure can be detected even when no communication apparatus is provided to a target apparatus since a failure is detected by loading sensors in a plurality of mobile terminals and a probability of notification can be improved.

## Claims

1. A failure information delivery system comprising:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device; and
at least one or more mobile object communication apparatuses comprising means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested; and
the failure management server, notifying the terminal device of location information of the failure to be estimated on the basis of the detected location information, time information, and characteristic information of articles, allows the terminal device to output the location information.

2. The failure information delivery system according to Claim 1,
wherein the failure management server holds priority search area information which is accepted from the terminal device and shows an area to be searched by priority, and on the basis of the priority search area information, allows the mobile object communication apparatus located in a predetermined area to search this area by priority.

3. The failure information delivery system according to Claim 1 or 2,
wherein the mobile object communication apparatus regularly notifies the failure management server of the detected location information and time information together with the characteristic information of the failure when detecting the existence of the characteristic information of the failure, of which search is requested.

4. A failure management server in a failure information delivery system, the system comprising:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device; and
at least one or more mobile object communication apparatuses comprising means for obtaining characteristic information of a failure and means for positioning a location of itself, the mobile object communication apparatuses searching a location where the characteristic information of the failure, of which search is requested, is located on the basis of the failure information obtained from the failure management server;
wherein the failure management server receives a notification of detected location information and time information from the mobile object communication apparatus together with the characteristic information of the failure when detecting existence of the characteristic information of the failure, of which search is requested; and
the failure management server, notifying the terminal device of location information of the failure to be estimated on the basis of the detected location information, time information, and characteristic information of articles, allows the terminal device to output the location information.

5. The failure management server according to Claim 4,
wherein the failure management server holds priority search area information which is accepted from the terminal device and shows an area to be searched by priority, and on the basis of the priority search area information, allows the mobile object communication apparatus located in a predetermined area to search this area by priority.

6. The failure management server according to Claim 4 or Claim 5,
wherein the failure management server regularly receives a notification of the detected location information and time information from the mobile object communication apparatus together with the characteristic information of the failure when detecting the existence of the characteristic information of the failure, of which search is requested.

7. A mobile object communication apparatus in a failure information delivery system, the system comprising:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device; and
at least one or more mobile object communication apparatuses comprising means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested; and
the mobile object communication apparatus receives a notification of location information of the failure to be estimated on the basis of the detected location information, time information, and characteristic information of articles from the failure management server and outputs the location information.

8. A failure information delivery method using:
a terminal device for requesting a failure management server to search a location where a failure to be searched is located by sending search request information including at least the failure to be searched and/ or characteristic information of the failure to be searched;
a failure management server for issuing failure information including at least failure identification information to identify each failure and/ or failure characteristic information owned by each failure to a mobile object communication apparatus on the basis of the search request information upon accepting a search request from the terminal device; and
at least one or more mobile object communication apparatuses comprising means for obtaining characteristic information of a failure and means for positioning a location of itself, the mobile object communication apparatuses searching a location where the characteristic information of the failure, of which search is requested, is located on the basis of the failure information obtained from the failure management server;
wherein the mobile object communication apparatus notifies the failure management server of detected location information and time information together with the characteristic information of the failure when detecting existence of the characteristic information of the failure, of which search is requested; and
the failure management server, notifying the terminal device of location information of the failure to be estimated on the basis of the detected location information, time information, and characteristic information of articles, allows the terminal device to output the location information.

9. The failure information delivery method according to Claim 8,
wherein the failure management server holds priority search area information which is accepted from the terminal device and shows an area to be searched by priority, and on the basis of the priority search area information, allows the mobile object communication apparatus located in a predetermined area to search this area by priority.

10. The failure information delivery method according to Claim 8 or Claim 9,
wherein the mobile object communication apparatus regularly notifies the failure management server of the detected location information and time information together with the characteristic information of the failure when detecting the existence of the characteristic information of the failure, of which search is requested.

11. A program allowing a failure management server in a failure information delivery system to carry out processing for receiving a notification of detected location information and time information from a mobile object communication apparatus together with characteristic information of a failure when detecting existence of the characteristic information of the failure, of which search is requested; and
processing for notifying a terminal device of location information of the failure to be estimated on the basis of the detected location information, time information, and characteristic information of articles and outputting the location information to the terminal device;
wherein the failure information delivery system comprising:
the terminal device for requesting the failure management server to search a location where the failure to be searched is located by sending search request information including at least the failure to be searched and/ or characteristic information of the failure to be searched;
the failure management server for issuing failure information including at least failure identification information to identify each failure and/ or failure characteristic information owned by each failure to the mobile object communication apparatus on the basis of the search request information upon accepting a search request from the terminal device; and
at least one or more mobile object communication apparatuses comprising means for obtaining the characteristic information of the failure and means for positioning the location of itself, the mobile object communication apparatuses searching the location where the characteristic information of the failure, of which search is requested, is located on the basis of the failure information obtained from the failure management server.

12. The program according to Claim 11, allowing the failure management server to carry out processing for holding priority search area information which is accepted from the terminal device and shows an area to be searched by priority, and on the basis of the priority search area information, allowing the mobile object communication apparatus located in a predetermined area to search this area by priority.

13. The program according to Claim 11 or Claim 12,
wherein the program allows the failure management server to carry out processing for regularly receiving a notification of the detected location information and time information from the mobile object communication apparatus together with the characteristic information of the failure when detecting the existence of the characteristic information of the failure, of which search is requested.

14. A program allowing a mobile object communication apparatus in a failure information delivery system to carry out processing for notifying a failure management server of detected location information and time information together with characteristic information of a failure when detecting existence of the characteristic information of the failure, of which search is requested; and
processing for receiving a notification of location information of the failure to be estimated on the basis of the detected location information, time information, and characteristic information of articles from the failure management server and outputting the location information;
wherein the failure information delivery system comprising:
the terminal device for requesting the failure management server to search a location where the failure to be searched is located by sending search request information including at least the failure to be searched and/ or characteristic information of the failure to be searched;
the failure management server for issuing failure information including at least failure identification information to identify each failure and/ or failure characteristic information owned by each failure to the mobile object communication apparatus on the basis of the search request information upon accepting a search request from the terminal device; and
at least one or more mobile object communication apparatuses comprising means for obtaining the characteristic information of the failure and means for positioning the location of itself, the mobile object communication apparatuses searching the location where the characteristic information of the failure, of which search is requested, is located on the basis of the failure information obtained from the failure management server.
